# EUROPEAN PATENT SPECIFICATION

(11) **EP 2 452 014 B1**
(45) Date of publication and mention of the grant of the patent: **10.08.2016**
(21) Application number: 10796795.2
(22) Date of filing: 23.06.2010
(51) Int. Cl.: D21H 11/20, D21C 9/00, D21H 11/18

(54) **PROCESS FOR THE PRODUCTION OF MICROFIBRILLATED CELLULOSE AND PRODUCED MICROFIBRILLATED CELLULOSE**
VERFAHREN ZUR HERSTELLUNG VON MIKROFIBRILLIERTER ZELLULOSE UND ERZEUGTE MIKROFIBRILLIERTE ZELLULOSE
PROCÉDÉ POUR LA PRODUCTION DE CELLULOSE MICROFIBRILLÉE ET CELLULOSE MICROFIBRILLÉE PRODUITE

(30) Priority: 07.07.2009 SE 0950534
(43) Date of publication of application: 16.05.2012
(73) Proprietor: Stora Enso Oyj, 00101 Helsinki (FI)
(72) Inventor: HEISKANEN, Isto, FIN-5510 Imatra (FI); BACKFOLK, Kaj, 53 130 Lappeenranta (FI); VEHVILÄINEN, Marianna, FIN-33720 Tampere (FI); KAMPPURI, Taina, FIN-33520 Tampere (FI); NOUSIAINEN, Pertti, FIN-33720 Tampere (FI)
(74) Representative: Lindberg, Berndt Åke
(86) International application number: PCT/IB2010/052850
(87) International publication number: WO 2011/004284

(56) References cited:
- WO-A1-2004/055268
- US-A1- 2010 065 236
- HENRIKSSON M. ET AL: 'An environmentally friendly method for enzyme-assisted preparation of microfibrillated cellulose (MFC) nanofibers' EUROPEAN POLYMER JOURNAL vol. 43, no. 8, 2007, pages 3434 - 3441, XP022183193

## Description

### Field of the invention

The present invention relates to a process for producing microfibrillated cellulose by treating cellulosic fibers. The invention also related to microfibrillated cellulose produced according to the process.

### Background

Cellulosic fibers are multi-component structures made from cellulose polymers, i.e. cellulose chains. Lignin, pentosans and other components known in art may also be present. The cellulose chains in the fibers are attached to each other to form elementary fibrils. Several elementary fibrils are bound to each other to form microfibrils and several microfibrils form aggregates. The links between the cellulose chains, elementary- and microfibrils are hydrogen bonds.

Microfibrillated cellulose (MFC) (also known as nanocellulose) is a material made from cellulose fibers, where the individual microfibrils or microfibril aggregates have been detached from each other. MFC is normally very thin (∼20 nm) and the length is often between 100 nm to 10 µm. However, the microfibrils may also be longer, for example between 10-100 µm.

The production of nanocellulose or microfibrillated cellulose with bacteria is another option. In contrast to the above, this is a bio-synthetic process starting from another raw material than wood fibers. However, it is a very expensive and time consuming process.

It is also possible to produce microfibrils from cellulose by the aid of different chemicals which will break or dissolve the fibers. However, it is then difficult to control the length of the formed fibrils and the fibrils are often too short.

One example of production of MFC is described in WO2007091942. In the method described in WO2007091942, the MFC is produced by refining followed by enzymatic treatment.

Another example of production of MFC is described in Henriksson et al.: "An environmentally friendly method for enzyme-assisted preparation of microfibrïllated cellulose (MFC) nanofibers". In a method described in this document, pulps are treated by enzymes in combination with mechanical shearing in order to disintegrate MFC from the wood fiber an wall.

However, there is still a need for an improved process for the production of microfibrillated cellulose.

### Summary of the invention

It is an object of the present invention to provide a process for production of microfibrillated cellulose in an improved and energy efficient way.

These objects and other advantages are achieved by the process according to claim 1. By combining mechanical and enzymatic treatment of cellulosic fibers in a single treatment step it is possible to produce microfibrillated cellulose (MFC) in a very energy efficient way. This is achieved by the independent claim and preferred embodiments of the process are defined in the dependent claims.

The invention relates to a process for the production of microfibrillated cellulose which process comprises the steps of, providing a slurry comprising cellulosic fibers, treating the slurry with an enzyme, mechanically treating the slurry so that the fibers are disintegrated wherein the mechanical treatment and the treatment with the enzyme is performed simultaneously in a single treatment step for a period of 15 minutes - 25 hours. By combining a mechanical treatment with an enzymatic treatment it has been shown that a much more efficient treatment of the fibers is achieved.

The single treatment step, i.e. the combined mechanical and enzymatic treatment, lasts for 15 minutes to 25 hours. The time needed in order to produce the desired microfibrillated cellulose, depends for example on the extent of the mechanical treatment and on the enzyme used.

The consistency of the slurry during the single treatment step is preferable between 4-45 % by weight, preferable between 10-30% by weight. By combining the mechanical and the enzymatic treatment it is possible to increase the consistency of the slurry comprising fibers. The mechanical treatment ensures that the enzymes will affect and decompose the fibers in an efficient way even though the consistency is high.

The temperature during the single treatment step is preferable below 95°C. The optimal temperature depends on the enzyme used. Too high temperature will kill the enzyme and it is therefore important that the temperature is kept at below the maximum temperature of the enzyme used and preferable at the optimum working temperature of the enzyme. Different enzymes have different resistance against temperatures and the maximum temperature allowed depends on the enzyme used during the treatment.

The enzyme is preferable an enzyme affecting cellulose, such as cellulase, and/or an enzyme affecting hemicellulose, such as xylanase. It is possible to add one type or several different types of enzymes during the enzymatic treatment. The enzyme used in the process will decompose the cellulosic fibers and increase the accessibility and activity of the fibers and thus also the production of microfibrillated cellulose.

The enzyme is preferable added before and/or during the mechanical treatment of the slurry. Enzymes may also be added at several addition points before and/or during the mechanical treatment of the slurry.

The mechanical and enzymatic treatment is preferable done in a compactor, shredder, refiner, defibrator, screw, pulper or in a pump.

The single treatment step, i.e. the combined mechanical and enzymatic treatment may be done in more than one subsequent single treatment steps. In this way it has been shown that the process is more efficient since the mechanical treatment may be soften and it has been shown that the production of the microfibrillated cellulose thus will be improved.

The invention further relates to microfibrillated cellulose produced according to the process described above.

### Detailed description

The invention relates to a process for producing microfibrillated cellulose in an improved and energy efficient way.

It has been shown that the combination of a mechanical treatment that disintegrates cellulosic fibers and an enzymatic treatment results in a much more efficient process for the production of microfibrillated cellulose. Disintegration means the fibers are shortened, softened or in any other way mechanically affected by the treatment. Only stirring or mixing of the slurry comprising fibers and an enzyme in order to ensure that the enzymes are even distributed in the slurry will not disintegrate the fibers in the way described by the present invention. The length of microfibrillated cellulose is short and the length of treated fibers of the slurry is thus strongly reduced by the combined treatment according to the invention.

The increased efficiency is due to the synergistic effect of the combined treatment. The mechanical treatment will disintegrate the fibers and the enzymes will then immediately attach to the fibers and soften the fibers. Since the enzymes are present during the mechanical treatment the enzymes will find more suitable places to attach and act on the cellulose. More enzymes can thus attach to the fibers and the amount of enzymes that are able to soften and decompose the fibers is increased. In this way, the combined treatment to produce microfibrillated cellulose will be much more efficient.

Enzymes that normally do not show very good ability to decompose cellulosic fibers will increase its ability when the enzymatic treatment is combined with the mechanical treatment according to the invention. It is thus possible to use enzymes that are not that efficient when the treatments are done sequential. The increased efficiency may depend on that the enzymes are present when suitable places for the enzyme to attach and act on the fibers appear. If the enzyme is added in a subsequent step, as described in prior art, many of the suitable places on the fibers are not available yet, i.e. it is not possible for the enzyme to attach and decompose the fiber at that place.

Another advantage with the present invention is that the mechanical treatment may be made softer since the enzymatic treatment is much more efficient. It is thus possible to decrease the energy needed during the mechanical treatment since the extent of the mechanical treatment can be reduced. In this both the strength of the produced microfibrillated cellulose is increased at the same time as the costs are decreased.

Furthermore, it has been shown that the produced microfibrillated cellulose will comprise less sugars compared to sequential treatments, i.e. the yield of microfibrillated cellulose is increased during the process according to the invention which also makes the process much more efficient.

An advantage with the present invention is that the combined treatment can be performed at high consistency. The consistency of the slurry comprising fibers is preferable between 10-30% by weight. Previous enzymatic treatments are normally done at a much lower consistency. Enzymatic treatment of cellulosic fibers at high consistency has previously been inefficient since the mixing is not good enough and the enzymes are thus not able to affect the fibers to the same extent. However, by combining a mechanical treatment which will disintegrate the fibers and an enzymatic treatment it is possible to provide good mixing even at high consistency.

The consistency of the slurry may also be lower, for example between 4-10 % by weight. Lower consistencies may be necessary if the combined treatment occur in a refiner or other similar equipment since the temperature otherwise may be too high, i.e. higher than the maximal temperature of the enzyme. Also, if the combined treatment occur in a pump it may be advantageous to have lower consistency of the slurry if the pump is not able to pump a high consistency slurry.

The consistency of the slurry may also be even higher, consistencies up to 45 % by weight might be possible.

It may also be possible to increase the consistency of the slurry during the combined treatment. This may be done in a screw or other equipment where it is possible to withdraw water or liquid during the process.

The combined mechanical treatment and the enzymatic treatment lasts for 15 minutes-25 hours, preferable between 1-3 hours. The time needed depends on the cellulosic fibers which are treated, on the activity of the enzyme as well as on the temperature and the pH of the treatment. The pH during the treatment with the enzyme is preferably between 4-7.The activity of the enzyme may be between 10-1000 nkat/g. Both the pH value and the activity of the enzymes depend for example both on the type of fibers and enzymes used.

It is preferred to use enzymes which break down hemicellulose, such as xylanase but other enzymes such as cellulase for example endoglucanase can also be used. The enzymes may be added in order to improve the mechanical treatment and to decrease the extension of the mechanical treatment and thus save both the fiber strength and energy needed. The enzyme used can be any wood degrading enzymes which decompose cellulosic fibers. The enzyme may decompose the primary layer of the fibers and in this way further increase the accessibility of the fibers. Cellulase is preferably used but other examples of usable enzymes are xylanase and mannanase. The enzyme is often an enzymatic preparation which can contain small parts of other enzymatic activities than the main enzyme of the preparation.

The temperature during the combined mechanical and enzymatic treatment is preferable below 95°C, it may be between 20-95°C. However, the optimal working temperature as well as the maximum temperature varies depending on the enzyme used as well on other parameters of the treatment, such as time and pH. If cellulase is used, the temperature during the treatment may be approximately 50°C.

The addition of the enzyme or enzymes to the slurry comprising fibers are either done before the slurry is mechanically treated and/or during the mechanical treatment. It is possible to add enzyme in more than one addition point. Where the addition occurs often depend on which equipment used since suitable addition points varies between different equipments.

The combined mechanical and enzymatic treatment can be done in a compactor, shredder, refiner, defibrator, pulper, screw, in a pump during pumping of the slurry or in any other known equipments for disintegrate fibers mechanically.

It may also be possible to modify the produced microfibrillated cellulose during production forming modified fibrils. This can for example be done in a screw or similar equipment.

The pressure during the combined treatment may be increased. In this way the penetration of the enzymes into the fibers will be increased and the temperature may also be increased making the process less energy demanding.

It has been shown that the use of a compactor may be advantageous since the compactor has a crushing effect of the fibers and this in combination with an enzymatic treatment has been shown to improve the production of microfibrillated cellulose. For example, it has been shown that the amount of sugars produced was reduced when a compactor was used. Also, it is possible to increase the consistency of the slurry in a compactor and still receive good efficiency of the combined treatment and on thus also on the process for producing microfibrillated cellulose. This is due to that a compactor cuts the fibers and since the fibers are shortened the viscosity is reduced and it is thus easier to pump and mix the slurry at higher consistencies. The consistency of the slurry in a compactor could be between 15-50% by weight, preferable between 20-35% by weight.

It has also been shown that a high consistency pulper is a very good equipment for the combined treatment. It is both possible to ensure good mixing and mechanical treatment of the fibers as well as it is possible for the treatment to proceed for a longer period of time. It may thus be possible to produce microfibrillated cellulose at a high consistency in a single process step by the aid of a pulper.

It may also be possible produce microfibrillated cellulose by treating the slurry comprising cellulosic fibers in more than one subsequent single treatment steps. By using more than one subsequent treatment steps it is possible to combine different mechanical equipments as well as increasing the time during which the slurry is treated in a good way. It might for example be difficult to use a pump as the only equipment since the treatment time of the slurry in the pump often is too short. However, if the first single treatment step is carried out in a pump, it may be favorable to combine this treatment with a subsequent combined treatment in another pump or equipment. It is possible to have two, three, four or more subsequent treatment steps with the combined treatment.

The slurry may be pre-treated before the combined treatment according to the invention. It may be preferred to first treat the slurry in a compactor, i.e. in a mechanical treatment step, followed by combined treatment in a suitable equipment such as a compactor.

The slurry comprising fibers may also comprise fillers or pigments. Conventionally used fillers and pigments may be used.

It may be preferred to terminate the enzymatic activity of the fibers after the treatment is completed, either by rising the temperature or the pH in order to denaturate the enzymes. This is preferable done before the fibers or microfibrillated cellulose of the slurry is used or moved to an additional treatment step. It may be possible to increase the temperature at the end of the combined treatment. Such heat treatment may also result in that the produced microfibrillated cellulose is grafted or that some detached components are reabsorbed to the MFC. It may also be possible to terminate the enzymatic activity by treating the slurry in a high consistency refining step.

The amount of microfibrillated cellulose produced from the fibers of the slurry is at least 20% by weight, preferable between 60-85% by weight.

All different kinds of pulps, such as chemical, mechanical or chemi-mechanical pulps can be used in the slurry. It is also possible to use paper or paperboard dry or wet broke or recycled fibers. An advantage with the present invention is that it is not that sensible to impurities making it possible to use broke or even recycled fibers for production of microfibrillated cellulose. The fibers can also be bleached or unbleached, even though the bleached is preferred since the lignin content is decreased and it is thus less energy demanding to produce the desired microfibrillated cellulose. The cellulosic fibers may be hardwood and/or softwood fibers or fibers from agricultural based raw materials such as, potato fibers or oat fibers.

The cellulosic material produced according to the invention may be used for the production of films.

MFC produced from softwood kraft pulps according to the process as described herein has been shown to achieve very good film forming properties.

Micro fibrillated cellulose (MFC) is often also referred to as nanocellulose. Fibers that has been fibrillated and which have microfibrils on the surface and microfibrils or whiskers that are separated and located in a water phase of a slurry are included in the definition MFC.

### Example

Pine kraft pulp was treated with the combined mechanical and enzymatic treatment with endoglucanase rich enzyme with an activity of 80 nkat/g. The pulp had a consistency of 20wt% and it was treated at pH5 at a temperature of 50°C ± 3 °C during 3 hours. The pulp was thereafter studied with microscope. As a reference, the same pulp was first treated mechanically for 5 hours at a pulp consistency of 20wt% followed by an enzymatic treatment at a pulp consistency of 5wt% during 3 hours using the same enzyme, dosage, pH and temperature as in the combined treatment.

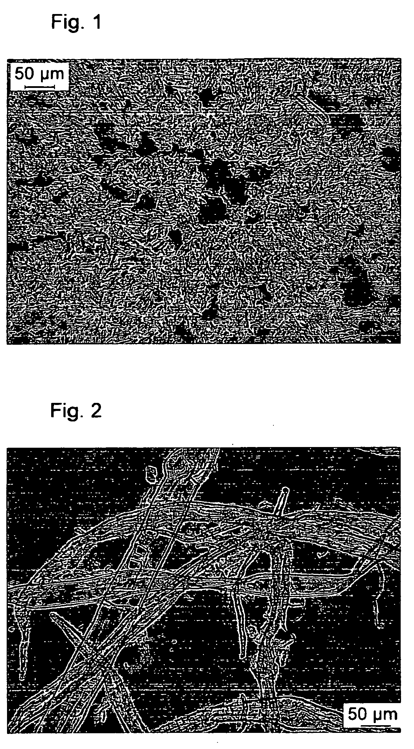

The results can be seen from figure 1 and figure 2. Figure 1 shows combined treatment according to the invention and Figure 2 shows a sequential treatment, i.e. first mechanical treatment followed by enzymatic treatment.

From the figures it can clearly be seen that the fibers has disintegrated when the fibers are treated according to the invention. Consequently, the process according to the invention is more efficient when it comes to producing microfibrillated cellulose compared to if the mechanical and enzymatic treatments were done separately in subsequent steps.

## Claims

1. A process for the production of microfibrillated cellulose which process comprises:
- providing a slurry comprising cellulosic fibers,
- treating the slurry with an enzyme,
- mechanically treating the slurry so that the fibers are disintegrated **characterized In that** the mechanical treatment and the treatment with the enzyme is performed simultaneously in a single treatment step for a period of 15 minutes - 25 hours.

2. The process according to any of the preceding claims **characterized in that** the consistency of the slurry during the single treatment step is between 4-45% by weight, preferable between 10-30% by weight.

3. The process according to any of the preceding claims **characterized in that** the temperature of the slurry during the single treatment step is below 95°C.

4. The process according to any of the preceding claims **characterized in that** the enzyme is an enzyme affecting cellulose, such as cellulase, and/or an enzyme affecting hemicellulose, such as xylanase.

5. The process according to any of the preceding claims **characterized in that** the enzyme is added to the slurry before or during the mechanical treatment.

6. The process according to any of the preceding claims **characterized in that** the single treatment step is done in a compactor, shredder, refiner, defibrator, screw, pulper or in a pump.

7. The process according to any of the preceding claims **characterized in that** the slurry can be treated in more than one subsequent single treatment steps.

## Patentansprüche

1. Verfahren zur Herstellung mikrofibrillierter Cellulose, wobei das Verfahren umfasst:
- Bereitstellen einer Aufschlämmung, die Cellulosefasern umfasst,
- Behandeln der Aufschlämmung mit einem Enzym,
- mechanisches Behandeln der Aufschlämmung, sodass die Fasern zerfallen, **dadurch gekennzeichnet, dass** die mechanische Behandlung und die Behandlung mit dem Enzym gleichzeitig in einem einzelnen Behandlungsschritt während eines Zeitraums von 15 Minuten bis 25 Stunden durchgeführt werden.

2. Verfahren nach einem der vorhergehenden Ansprüche,
**dadurch gekennzeichnet, dass** die Stoffdichte der Aufschlämmung während des einzelnen Behandlungsschrittes zwischen 4 und 45 Gewichts-%, vorzugsweise zwischen 10 und 30 Gewichts-%, beträgt.

3. Verfahren nach einem der vorhergehenden Ansprüche,
**dadurch gekennzeichnet, dass** die Temperatur der Aufschlämmung während des einzelnen Behandlungsschrittes unter 95 °C beträgt.

4. Verfahren nach einem der vorhergehenden Ansprüche,
**dadurch gekennzeichnet, dass** das Enzym ein Enzym ist, das auf Cellulose einwirkt, wie z.B. Cellulase, und/oder ein Enzym ist, das auf Hemicellulose einwirkt, wie z.B. Xylanase.

5. Verfahren nach einem der vorhergehenden Ansprüche,
**dadurch gekennzeichnet, dass** das Enzym vor oder während der mechanischen Behandlung der Aufschlämmung zugesetzt wird.

6. Verfahren nach einem der vorhergehenden Ansprüche,
**dadurch gekennzeichnet, dass** der einzelne Behandlungsschritt in einem Kompaktor, einer Zerreißmaschine, einem Refiner, einem Defibrator, einer Schnecke, einem Stofflöser oder in einer Pumpe erfolgt.

7. Verfahren nach einem der vorhergehenden Ansprüche,
**dadurch gekennzeichnet, dass** die Aufschlämmung in mehr als einem nachfolgenden einzelnen Behandlungsschritt behandelt werden kann.

## Revendications

1. Procédé destiné à la production de cellulose microfibrillée, lequel procédé comprend :
- la fourniture d'une bouillie comprenant des fibres cellulosiques,
- le traitement de la bouillie avec une enzyme,
- le traitement mécanique de la bouillie de sorte que les fibres soient désintégrées, **caractérisé en ce que** le traitement mécanique et le traitement avec l'enzyme sont effectués simultanément dans une étape de traitement unique pendant une durée de 15 minutes à 25 heures.

2. Procédé selon l'une quelconque des revendications précédentes, **caractérisé en ce que** la consistance de la bouillie durant l'unique étape de traitement est entre 4 et 45 % en poids, de préférence entre 10 et 30 % en poids.

3. Procédé selon l'une quelconque des revendications précédentes, **caractérisé en ce que** la température de la bouillie durant l'unique étape de traitement est inférieure à 95 °C.

4. Procédé selon l'une quelconque des revendications précédentes, **caractérisé en ce que** l'enzyme est une enzyme ayant un effet sur la cellulose, telle que la cellulase, et/ou une enzyme ayant un effet sur l'hémicellulose, telle que la xylanase.

5. Procédé selon l'une quelconque des revendications précédentes, **caractérisé en ce que** l'enzyme est ajoutée à la bouillie avant ou pendant le traitement mécanique.

6. Procédé selon l'une quelconque des revendications précédentes, **caractérisé en ce que** l'unique étape de traitement est effectuée dans un compacteur, un déchiqueteur, un raffineur, un défibrateur, un vis, un pulpeur ou dans une pompe.

7. Procédé selon l'une quelconque des revendications précédentes, **caractérisé en ce que** la bouillie peut être traitée en plus qu'une étape ultérieure unique.
